# EUROPÄISCHE PATENTANMELDUNG

(11) **EP 3 493 369 A1**
(43) Veröffentlichungstag der Anmeldung: **05.06.2019**
(21) Anmeldenummer: 17204255.8
(22) Anmeldetag: 29.11.2017
(51) Int. Cl.: H02K 1/18

(54) **HALTERUNG VON STATOR IM GEHÄUSE DURCH FEDERELEMENTE**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Eine elektrische Maschine weist ein Gehäuse (1), einen Stator (2) und einen Rotor (3) auf. Der Rotor (3) ist relativ zum Stator (2) gelagert, so dass der Rotor (3) um eine Rotationsachse (5) rotierbar ist. Der Stator (2) umgibt den Rotor (3) radial außen. Das Gehäuse (1) ist von radial außen auf den Stator (2) aufgeschrumpft. Der Stator (2) weist an seinem radial äußeren Umfang Federelemente (8,12,15) auf, die beim Aufschrumpfen des Gehäuses (1) auf den Stator (2) zumindest teilweise elastisch nach radial innen ausgelenkt werden, so dass sie mit einer Federkraft am Gehäuse (1) anliegen.

## Beschreibung

Die vorliegende Erfindung geht aus von einer elektrischen Maschine,
- wobei die elektrische Maschine ein Gehäuse, einen Stator und einen Rotor aufweist,
- wobei der Rotor relativ zum Stator gelagert ist, so dass der Rotor um eine Rotationsachse rotierbar ist,
- wobei der Stator den Rotor radial außen umgibt,
- wobei das Gehäuse von radial außen auf den Stator aufgeschrumpft ist.

Bei elektrischen Maschinen wird das Gehäuse üblicherweise auf den Stator aufgeschrumpft bzw. - umgekehrt betrachtet - der Stator in das Gehäuse eingeschrumpft. Oftmals besteht das Gehäuse aus Aluminium, während der Stator aus Elektroblechen und damit aus Stahl besteht. Aluminium und Stahl haben voneinander verschiedene thermische Ausdehnungskoeffizienten. Insbesondere ist der thermische Ausdehnungskoeffizient von Aluminium größer als der von Stahl. Wenn die elektrische Maschine großen Temperaturschwankungen ausgesetzt ist, kann es bei hohen Temperaturen von beispielsweise 100°C und mehr dazu kommen, dass sich die Schrumpfverbindung zwischen Stator und Gehäuse lockert, so dass der Stator nicht mehr hinreichend drehfest im Gehäuse gehalten ist. Umgekehrt kann es bei niedrigen Temperaturen von beispielsweise -30°C und weniger zu einer Überlastung des Gehäuses kommen, so dass das Gehäuse gesprengt wird. Eine betriebssichere Auslegung des Verbundes von Gehäuse und Stator ist daher nicht in jedem Anwendungsfall möglich.

Im Stand der Technik wird die Schrumpfverbindung zwischen Stator und Gehäuse oftmals derart ausgelegt, dass das Gehäuse auch bei niedrigen Temperaturen nicht gesprengt wird. Um in diesem Fall die drehfeste Verbindung zwischen Stator und Gehäuse bei hohen Temperaturen zuverlässig aufrecht zu erhalten, wird zusätzlich ein Formschluss zwischen Gehäuse und Stator hergestellt. Beispielsweise kann in Radialrichtung eine Anzahl von Bohrungen (1, 2, 3 ...) durch das Gehäuse hindurch in den Stator eingebracht werden, wobei in den Bohrungen jeweils ein Stift fixiert wird.

Die Aufgabe der vorliegenden Erfindung besteht darin, eine elektrische Maschine der eingangs genannten Art derart weiterzuentwickeln, dass der Stator auf einfache Weise über einen hohen Temperaturbereich zuverlässig im Gehäuse drehfest gehalten und fixiert wird.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 11.

Erfindungsgemäß wird eine elektrische Maschine der eingangs genannten Art dadurch ausgestaltet, dass der Stator an seinem radial äußeren Umfang Federelemente aufweist, die beim Aufschrumpfen des Gehäuses auf den Stator zumindest teilweise elastisch nach radial innen ausgelenkt werden, so dass sie mit einer Federkraft am Gehäuse anliegen.

Die Auslenkung der Federelemente kann alternativ vollelastisch oder gemischt elastisch-plastisch sein. In der Regel ist es ausreichend, wenn das Ausmaß der Auslenkung unter 1 mm liegt. Meist ist sogar eine Auslenkung von 0,2 mm bis 0,8 mm ausreichend, insbesondere von 0,4 mm bis 0,6 mm.

Vorzugsweise weist der Stator von den Federelementen aus nach radial innen gesehen unterhalb der Federelemente jeweils einen Freiraum auf. Dadurch können die Federelemente beim Aufschrumpfen des Gehäuses auf den Stator in die Freiräume hinein ausweichen.

Zur Implementierung der Federelemente sind verschiedene Ausgestaltungen möglich.

So ist es beispielsweise möglich, dass der Stator an seinen beiden axialen Enden Endscheiben aufweist und die Federelemente an den Endscheiben angeordnet sind. Diese Ausgestaltung weist den Vorteil auf, dass am Stator selbst keinerlei Modifikationen erforderlich sind, sondern lediglich die entsprechend ausgestalteten Endscheiben zusätzlich an die axialen Enden des Stators angesetzt werden müssen. Das Ansetzen der Endscheiben kann problemlos zu einem günstigen Prozessschritt bei der Herstellung des Stators erfolgen, beispielsweise in Verbindung mit dem Stapeln der einzelnen Statorbleche des Stators zu einem Statorblechpaket. Die Verbindung der Endscheiben mit dem Stator kann auf prinzipiell beliebige Weise erfolgen, beispielsweise durch Klammern, Schweißen, Nieten, Kleben und dergleichen mehr.

Im Falle der Implementierung der Federelemente mittels Endscheiben sind die Federelemente vorzugsweise als Vorsprünge ausgebildet, die sich von einem flachen Hauptelement der jeweiligen Endscheibe aus in Axialrichtung gesehen vom Stator weg erstrecken. Dadurch gestaltet sich die Konstruktion des Stators besonders einfach. Die Endscheiben bilden somit in einer Radial-Axial-Ebene gesehen ein U, dessen mittlerer Schenkel das flache Hauptelement bildet und deren beide äußere Schenkel die Vorsprünge bilden. Die Vorsprünge können tangential umlaufend oder unterbrochen sein.

Die Vorsprünge erstrecken sich in Axialrichtung gesehen über eine axiale Länge. Vorzugsweise sind die Vorsprünge dachartig geformt, so dass sie in einem in Axialrichtung gesehen mittleren Bereich mit der Federkraft am Gehäuse anliegen. Dadurch können die Vorsprünge als Einführhilfe dienen.

In vielen Fällen weist der Stator Klammerbänder auf, die den Stator an seinem radial äußeren Umfang in Axialrichtung gesehen übergreifen. In diesem Fall ist es - alternativ zum Vorsehen von Endscheiben - möglich, dass die Klammerbänder die Federelemente enthalten.

Vorzugsweise weist der Stator in diesem Fall am radial äußeren Umfang axial verlaufende Nuten auf, in denen die Klammerbänder angeordnet sind. Dadurch ist es möglich, dass die Klammerbänder den Stator nur im Bereich der Federelemente radial überragen. Der Stator kann somit in tangential zwischen den einzelnen Klammerbändern liegenden Bereichen weiterhin direkt am Gehäuse anliegen.

Üblicherweise besteht der Stator aus Statorblechen, die in Axialrichtung gesehen aufeinander gestapelt sind. Dadurch ist es in einer wiederum alternativen Ausgestaltung möglich, dass der Stator auf seinem radial äußeren Umfang Vertiefungen aufweist und die Federelemente Bestandteile von an die Vertiefungen in Axialrichtung angrenzenden Statorblechen sind. Diese Ausgestaltung weist den Vorteil auf, dass zum Bilden der Federelemente und zum Bilden der Freiräume für die Federelemente außer den sowieso vorhandenen Statorblechen keinerlei zusätzliche Elemente erforderlich sind. Lediglich die Statorbleche selbst müssen entsprechend ausgestaltet werden.

Eine besonders vorteilhafte Ausgestaltung ergibt sich dadurch, dass die Federelemente als nach radial außen ragende Laschen jeweils eines einzelnen der Statorbleche ausgebildet sind und die Vertiefungen als Ausnehmungen jeweils mehrerer unmittelbar aufeinanderfolgender der Statorbleche ausgebildet sind. Die Anzahl an jeweils unmittelbar aufeinanderfolgenden Statorblechen, welche jeweils eine Vertiefung bilden, liegt vorzugsweise zwischen zwei und sechs, insbesondere zwischen drei und fünf.

Besonders bevorzugt ist eine Ausgestaltung, bei der die Statorbleche jeweils eine Anzahl an Laschen und eine entsprechend größere Anzahl an Ausnehmungen aufweisen und die Laschen und die Ausnehmungen tangential zur Rotationsachse gesehen gleichmäßig verteilt angeordnet sind. Dadurch ist es möglich, für die Statorbleche stets ein und denselben Blechzuschnitt zu verwenden und unmittelbar aufeinanderfolgende Statorbleche lediglich jeweils um einen Winkel gegeneinander zu verdrehen.

Vorzugsweise sind die Federelemente an ihren am Gehäuse anliegenden Flächen aufgeraut. Dadurch ergibt sich ein verbesserter Reibschluss zwischen den Federelementen und dem Gehäuse. Die Federelemente verkrallen sich sozusagen am Gehäuse. Das Aufrauen der Federelemente kann beispielsweise durch Sandstrahlen, Riffeln, Rändeln, Aufbringen von körnigem Staub (beispielsweise Korund) und anderes mehr erfolgen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine in einer Schnittdarstellung,
- FIG 2: ein Detail eines Stators in perspektivischer Darstellung,
- FIG 3: ein axiales Ende eines Stators in einer Seitenansicht,
- FIG 4: das axiale Ende von FIG 3 in einer Frontansicht,
- FIG 5: einen Ausschnitt eines Stators in perspektivischer Darstellung,
- FIG 6: ein Statorblech,
- FIG 7: einen Ausschnitt eines Stators in perspektivischer Darstellung,
- FIG 8: einen Ausschnitt eines Stators einschließlich des umgebenden Gehäuses in perspektivischer Darstellung,
- FIG 9: einen Teil eines Stators vor dem Aufschrumpfen des Gehäuses in perspektivischer Darstellung,
- FIG 10: den Teil des Stators von FIG 9 nach dem Aufschrumpfen des Gehäuses in perspektivischer Darstellung und
- FIG 11: ein Statorblech.

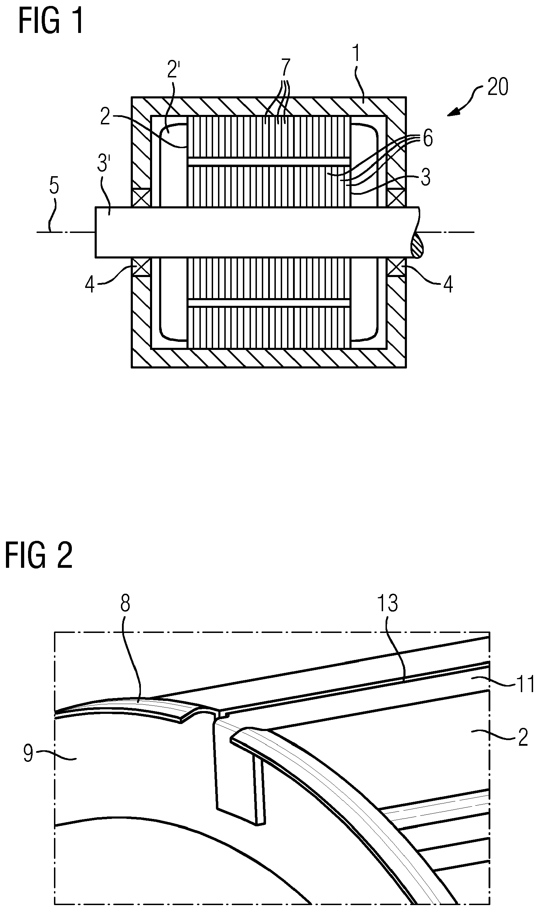

Gemäß FIG 1 weist eine elektrische Maschine ein Gehäuse 1, einen Stator 2 und einen Rotor 3 auf. Im Stator 2 ist eine Statorwicklung 2' angeordnet. Von der Statorwicklung 2' sind in FIG 1 nur die Wickelköpfe sichtbar. Der Rotor 3 - genauer: eine Rotorwelle 3', auf welcher der Rotor 3 drehfest angeordnet ist, - ist relativ zum Stator 2 in Lagern 4 gelagert. Der Rotor 3 ist dadurch um eine Rotationsachse 5 rotierbar.

Soweit nachfolgend die Begriffe "axial", "radial" und "tangential" verwendet werden, sind sie stets auf die Rotationsachse 5 bezogen. "Axial" ist eine Richtung parallel zur Rotationsachse 5. "Radial" ist eine Richtung orthogonal zur Rotationsachse 5 direkt auf die Rotationsachse 5 zu bzw. von ihr weg. "Tangential" ist eine Richtung, die sowohl orthogonal zur Axialrichtung als auch orthogonal zur Radialrichtung verläuft. "Tangential" ist also eine Richtung, die bei einer konstanten Axialposition und mit einem konstanten radialen Abstand kreisförmig um die Rotationsachse 5 herum gerichtet ist.

Der Rotor 3 besteht in der Regel aus einer Vielzahl von Rotorblechen 6, die in Axialrichtung gesehen aufeinander gestapelt sind. Dies ist im Rahmen der vorliegenden Erfindung jedoch von untergeordneter Bedeutung. In ähnlicher Weise besteht der Stator 2 aus einer Vielzahl von Statorblechen 7, die in Axialrichtung gesehen aufeinander gestapelt sind. Sowohl die Rotorbleche 6 (sofern vorhanden) als auch die Statorbleche 7 bestehen aus Elektroblech, im Ergebnis also aus Stahlblech. Das Gehäuse 1 kann beispielsweise aus Stahl, Gusseisen oder aus Aluminium bestehen.

Der Stator 2 umgibt den Rotor 3 radial außen. Die elektrische Maschine ist also in üblicher Weise als Innenläufer ausgebildet. Auf den Stator 2 wiederum ist das Gehäuse 1 von radial außen aufgeschrumpft.

Der Stator 2 weist an seinem radial äußeren Umfang Federelemente 8, 12, 15 auf. Die Federelemente 8, 12, 15 sind in FIG 1 nicht dargestellt. Sie werden beim Aufschrumpfen des Gehäuses 1 auf den Stator 2 zumindest teilweise elastisch nach radial innen ausgelenkt. Sie liegen dadurch mit einer Federkraft am Gehäuse 1 an. Mögliche Ausgestaltungen der Federelemente 8, 12, 15 werden nachfolgend in Verbindung mit den weiteren FIG näher erläutert.

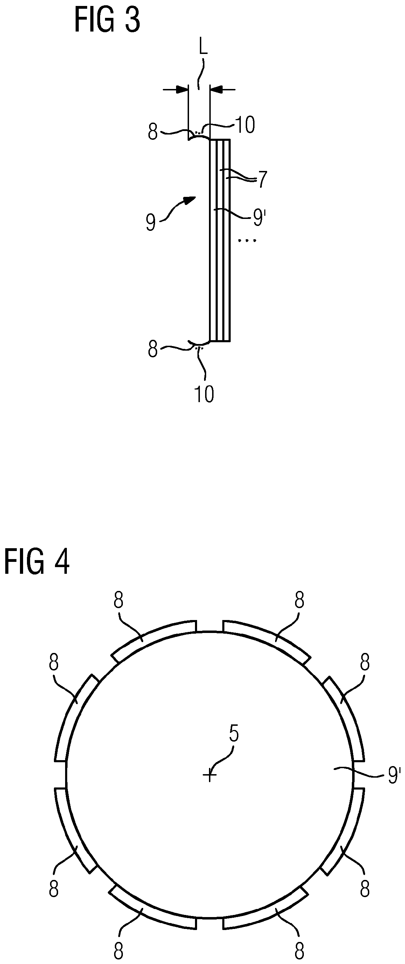

Gemäß den FIG 2 bis 4 kann der Stator 2 beispielsweise an seinen beiden axialen Enden jeweils eine Endscheibe 9 aufweisen. In diesem Fall sind die Federelemente 8 an den Endscheiben 9 angeordnet. Insbesondere sind die Federelemente 8 entsprechend der Darstellung in den FIG 2 bis 4 als Vorsprünge 8 ausgebildet. Die Vorsprünge 8 erstrecken sich von einem flachen Hauptelement 9' der jeweiligen Endscheibe 9 aus vorzugsweise in Axialrichtung gesehen vom Stator 2 weg. Die Endscheiben 9 bilden somit, wie besonders deutlich aus FIG 3 ersichtlich ist, im Querschnitt ein U. Wenn nur einer der beiden radial äußeren Ränder betrachtet wird, bildet die jeweilige Endscheibe 9 ein L.

Es ist möglich, dass die Vorsprünge 8 sich in Tangentialrichtung vollständig um die Rotationsachse 5 herum erstrecken. Vorzugsweise sind die Vorsprünge 8 jedoch unterbrochen. Beispielsweise können in Tangentialrichtung gesehen fünf bis zehn Vorsprünge 8 vorhanden sein. Die genaue Anzahl von Vorsprüngen 8 kann nach Bedarf gewählt werden.

Wie besonders deutlich aus FIG 3 erkennbar ist, erstrecken sich die Vorsprünge 8 in Axialrichtung gesehen über eine axiale Länge L. Weiterhin erstrecken die Vorsprünge 8 sich zumindest in ihrem unmittelbar an die Endscheiben 9 angrenzenden Bereich auch nach radial außen. Vorzugsweise weisen die Vorsprünge 8 jedoch einen radial äußersten Bereich auf, von dem ausgehend sie sich mit zunehmender axialer Entfernung vom Stator 2 wieder nach radial innen erstrecken. Die Vorsprünge sind also dachartig geformt und liegen in einem in Axialrichtung gesehen mittleren Bereich mit der Federkraft am Gehäuse 1 an. Dadurch können die Vorsprünge 8 beim Einführen des Stators 2 in das Gehäuse 1 als Einführhilfe dienen. Der Bereich, in dem die Vorsprünge 8 am Gehäuse 1 anliegen, liegt vorzugsweise in etwa bei L/2, also der Hälfte der axialen Länge L der Vorsprünge 8.

Aufgrund des Umstands, dass die Vorsprünge 8 sich in Axialrichtung gesehen vom Stator 2 weg erstrecken, befindet sich von den Vorsprüngen 8 aus nach radial innen gesehen unterhalb der Vorsprünge 8 ein Freiraum. In diesen Freiraum können die Vorsprünge 8 beim Aufschrumpfen des Gehäuses 1 auf den Stator 2 ausgelenkt werden.

Wie in FIG 3 durch entsprechende Pünktchen 10 angedeutet ist, können die Vorsprünge 8 an ihren am Gehäuse 1 anliegenden Flächen aufgeraut sein. Diese Ausgestaltung verbessert die Reibhaftung des Stators 2 am Gehäuse 1. Alternativ können die Vorsprünge 8 auch scharfkantig ausgeführt werden.

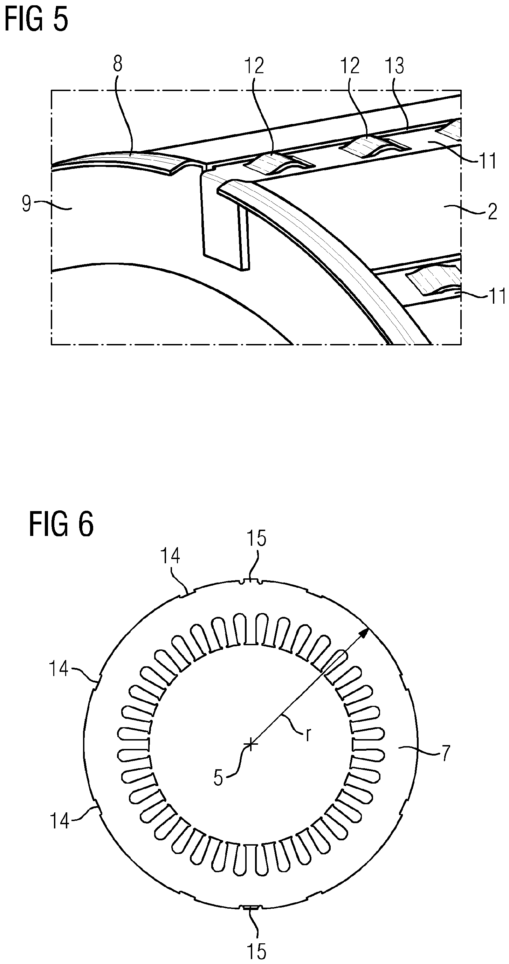

Bei der Ausgestaltung gemäß den FIG 2 bis 4 weist der Stator 2 Klammerbänder 11 auf, welche den Stator 2 an seinem radial äußeren Umfang in Axialrichtung gesehen übergreifen und die Statorbleche 7 einschließlich der Endscheiben 9 in Axialrichtung aneinander pressen. Auch bei der Ausgestaltung gemäß FIG 5 sind derartige Klammerbänder 11 vorhanden. Die Endscheiben 9 entfallen jedoch. Stattdessen enthalten die Klammerbänder 11 die Federelemente 12 in Form entsprechender Vorsprünge 12. die Vorsprünge 12 erstrecken sich entsprechend der Darstellung in FIG 5 nach radial außen.

Vorzugsweise - dies gilt sowohl für die Ausgestaltung gemäß den FIG 2 bis 4 als auch für die Ausgestaltung gemäß FIG 5 - weist der Stator 2 an seinem radial äußeren Umfang axial verlaufende Nuten 13 auf, in denen die Klammerbänder 11 angeordnet sind. Die Nuten 13 weisen in Radialrichtung eine Tiefe auf, die derart auf die (radiale) Dicke der Klammerbänder 11 abgestimmt ist, dass die Klammerbänder 11 den Stator 2 nur im Bereich der Vorsprünge 12 radial überragen.

Die Klammerbänder 11 sind im Bereich unter den Vorsprüngen 12 "leer". Die Klammerbänder 11 bilden daher in Verbindung mit dem Stator 2 im Bereich der Vorsprünge 12 jeweils einen Freiraum aus, der von den Vorsprüngen 12 aus gesehen radial innen unterhalb der Vorsprünge 12 angeordnet ist. In diese Freiräume können die Vorsprünge 12 beim Aufschrumpfen des Gehäuses 1 auf den Stator 2 ausgelenkt werden.

Analog zu der Ausgestaltung gemäß den FIG 2 bis 4 können auch die Vorsprünge 12 an ihren am Gehäuse 1 anliegenden Flächen aufgeraut sein. Diese Ausgestaltung verbessert die Reibhaftung des Stators 2 am Gehäuse 1. Die Aufrauung ist in FIG 5 wieder durch entsprechende Pünktchen 10 angedeutet.

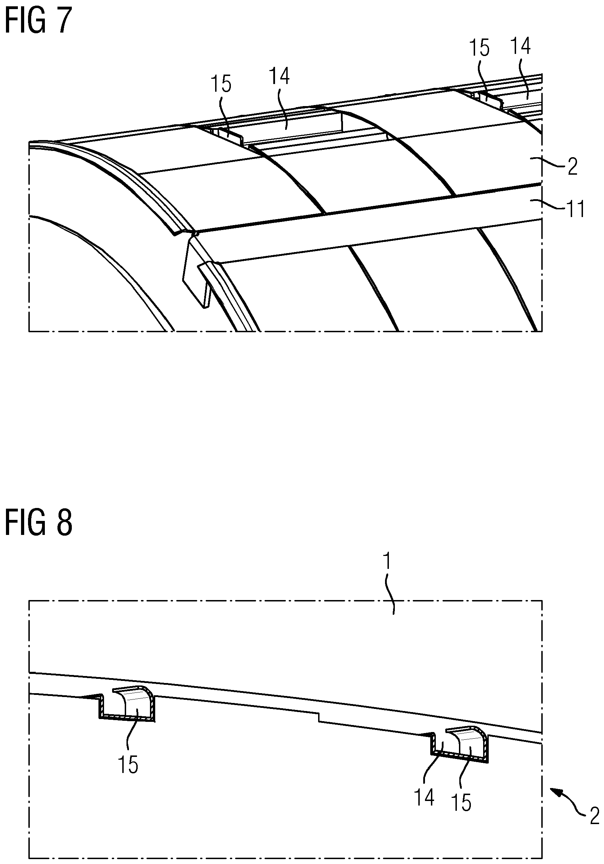

In Verbindung mit den FIG 6 bis 8 wird nunmehr eine weitere Ausgestaltung der vorliegenden Erfindung erläutert. Bei dieser Ausgestaltung weist der Stator 2 auf seinem radial äußeren Umfang Vertiefungen 14 auf. In diesem Fall können die Federelemente 15 Bestandteile von Statorblechen 7 sein, welche in Axialrichtung an die Vertiefungen 14 angrenzen. Die Federelemente 15 können insbesondere als Laschen 15 ausgebildet sein, welche in Radialrichtung über den normalen Radius r der Statorbleche 7 hinausragen. Die Vertiefungen 14 können umgekehrt als Ausnehmungen 14 ausgebildet sein, welche sich nicht bis zum normalen Radius r der Statorbleche 7 erstrecken. Auf eine (1) Lasche 15, die von einem (1) der Statorbleche 7 gebildet wird, folgt hierbei in Axialrichtung eine Vertiefung 14, die durch die Ausnehmungen 14 mehrerer unmittelbar aufeinanderfolgender Statorbleche 7 gebildet wird. Die Anzahl unmittelbar aufeinanderfolgender Statorbleche 7, welche die Ausnehmungen 14 aufweisen, liegt in der Regel bei zwei bis sechs, meist bei drei oder fünf, in seltenen Fällen auch bei vier.

Im Falle der Ausgestaltung gemäß den FIG 6 bis 8 werden die Federelemente/Laschen 15 in Richtung auf die Vertiefungen 14 ausgelenkt. Dort bildet der Stator 2 durch die Vertiefungen 14 von den Laschen 15 aus nach radial innen gesehen unterhalb der Laschen 15 jeweils einen Freiraum, in den hinein die Laschen 15 beim Aufschrumpfen des Gehäuses 1 auf den Stator 2 ausgelenkt werden.

Analog zu der Ausgestaltung gemäß den FIG 2 bis 4 sowie FIG 5 können auch die Laschen 15 an ihren am Gehäuse 1 anliegenden Flächen aufgeraut sein.

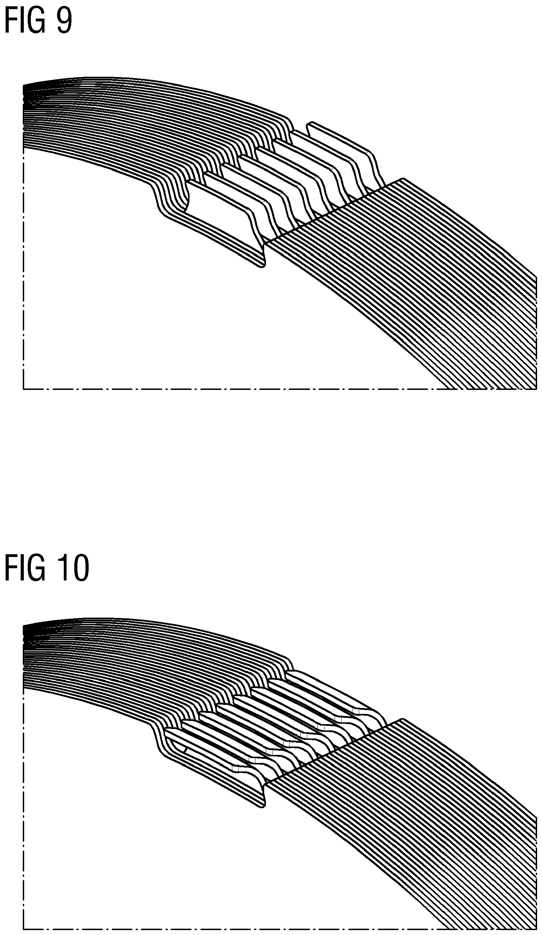

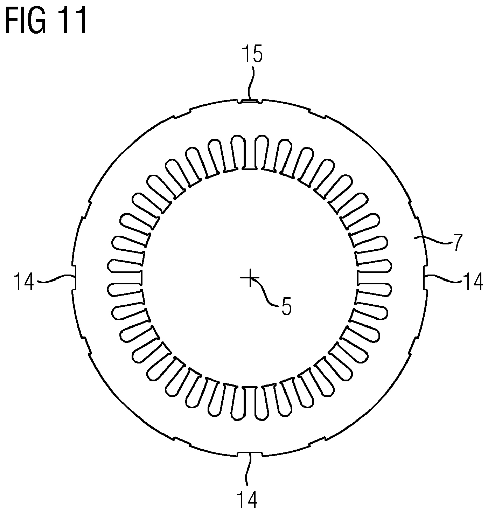

Nachfolgend wird in Verbindung mit den FIG 9 bis 11 eine besonders bevorzugte Implementierung der Ausgestaltung der FIG 6 bis 8 erläutert. Gemäß den FIG 9 bis 11 weisen die Statorbleche 7 sowohl jeweils eine Anzahl von Laschen 15 als auch eine entsprechend größere Anzahl an Ausnehmungen 14 auf. Die Laschen 15 und die Ausnehmungen 14 sind in Tangentialrichtung gesehen gleichmäßig verteilt angeordnet. Wenn beispielsweise entsprechend der Darstellung in FIG 9 die Statorbleche 7 jeweils eine (1) Lasche 15 und drei Ausnehmungen 14 aufweisen, sind die Lasche 15 und die Ausnehmungen 14 jeweils um 90° gegeneinander versetzt. Eine der drei Ausnehmungen 14 liegt also der Lasche 15 diametral gegenüber, eine Verbindungslinie der beiden anderen Ausnehmungen 14 schneidet die Verbindungslinie der Lasche 15 und der diametral gegenüberliegenden Ausnehmung 14 orthogonal. In analoger Weise würde beispielsweise bei einer Ausgestaltung mit einer (1) Lasche 15 und fünf Ausnehmungen 14 ein Winkelversatz der Lasche 15 zu den tangential benachbarten Ausnehmungen 14 und ein Winkelversatz tangential benachbarter Ausnehmungen 14 bei jeweils 60° liegen.

Im Regelfall wird das Statorblech 7 nur eine einzige Lasche 15 aufweisen. In manchen Fällen können aber auch zwei Laschen 15 vorhanden sein. In diesem Fall liegen die Laschen 15 einander diametral gegenüber. Ein Winkelversatz der Lasche 15 zu den tangential benachbarten Ausnehmungen 14 und ein Winkelversatz tangential benachbarter Ausnehmungen 14 würde in diesem Fall bei drei Ausnehmungen 14 pro Lasche 15 bei jeweils 45° liegen, bei fünf Ausnehmungen 14 pro Lasche 15 bei jeweils 30°.

Zusammengefasst betrifft die vorliegende Erfindung somit folgenden Sachverhalt:
Eine elektrische Maschine weist ein Gehäuse 1, einen Stator 2 und einen Rotor 3 auf. Der Rotor 3 ist relativ zum Stator 2 gelagert, so dass der Rotor 3 um eine Rotationsachse 5 rotierbar ist. Der Stator 2 umgibt den Rotor 3 radial außen. Das Gehäuse 1 ist von radial außen auf den Stator 2 aufgeschrumpft. Der Stator 2 weist an seinem radial äußeren Umfang Federelemente 8, 12, 15 auf, die beim Aufschrumpfen des Gehäuses 1 auf den Stator 2 zumindest teilweise elastisch nach radial innen ausgelenkt werden, so dass sie mit einer Federkraft am Gehäuse 1 anliegen.

Die vorliegende Erfindung weist viele Vorteile auf. Insbesondere ist es für eine zuverlässige Fixierung des Stators 2 im Gehäuse 1 nicht erforderlich, nach dem Fixieren des Stators 2 im Gehäuse 1 weitere Bearbeitungsvorgänge vorzunehmen. Insbesondere ein Bohren - und damit die Erzeugung von Bohrspänen - können entfallen. Auch besteht keine Gefahr, eine Abdichtung des Innenraums des Gehäuses 1 durch eine derartige Bohrung zu verletzen. Eine Wasserkühlung ist auf einfache Weise implementierbar. In manchen Fällen ist es sogar möglich, gegenüber einer vergleichbaren elektrischen Maschine des Standes der Technik ein Gehäuse 1 mit einer geringeren Gehäusewandstärke zu verwenden. Auch kann es möglich sein, Bearbeitungstoleranzen zu vergrößern.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine ein Gehäuse (1), einen Stator (2) und einen Rotor (3) aufweist,
- wobei der Rotor (3) relativ zum Stator (2) gelagert ist, so dass der Rotor (3) um eine Rotationsachse (5) rotierbar ist,
- wobei der Stator (2) den Rotor (3) radial außen umgibt,
- wobei das Gehäuse (1) von radial außen auf den Stator (2) aufgeschrumpft ist,
**dadurch gekennzeichnet, dass** der Stator (2) an seinem radial äußeren Umfang Federelemente (8,12, 15) aufweist, die beim Aufschrumpfen des Gehäuses (1) auf den Stator (2) zumindest teilweise elastisch nach radial innen ausgelenkt werden, so dass sie mit einer Federkraft am Gehäuse (1) anliegen.

2. Elektrische Maschine nach Anspruch 1, **dadurch gekennzeichnet, dass** der Stator (2) von den Federelementen (8,12,15) aus nach radial innen gesehen unterhalb der Federelemente (8,12,15) jeweils einen Freiraum aufweist.

3. Elektrische Maschine nach Anspruch 1 oder 2, **dadurch gekennzeichnet, dass** der Stator (2) an seinen beiden axialen Enden Endscheiben (9) aufweist und dass die Federelemente (8) an den Endscheiben (9) angeordnet sind.

4. Elektrische Maschine nach Anspruch 3, **dadurch gekennzeichnet, dass** die Federelemente (8) als Vorsprünge (8) ausgebildet sind, die sich von einem flachen Hauptelement (9') der jeweiligen Endscheibe (9) aus in Axialrichtung gesehen vom Stator (2) weg erstrecken.

5. Elektrische Maschine nach Anspruch 3 oder 4, **dadurch gekennzeichnet, dass** die Vorsprünge (8) sich in Axialrichtung gesehen über eine axiale Länge (L) erstrecken und dass die Vorsprünge (8) dachartig geformt sind, so dass sie in einem in Axialrichtung gesehen mittleren Bereich mit der Federkraft am Gehäuse (1) anliegen.

6. Elektrische Maschine nach Anspruch 1 oder 2, **dadurch gekennzeichnet, dass** der Stator (2) Klammerbänder (11) aufweist, die den Stator (2) an seinem radial äußeren Umfang in Axialrichtung gesehen übergreifen, und dass die Klammerbänder (11) die Federelemente (12) enthalten.

7. Elektrische Maschine nach Anspruch 6, **dadurch gekennzeichnet, dass** der Stator (2) am radial äußeren Umfang axial verlaufende Nuten (13) aufweist und dass die Klammerbänder (11) in den Nuten (13) angeordnet sind, so dass die Klammerbänder (11) den Stator (2) nur im Bereich der Federelemente (12) radial überragen.

8. Elektrische Maschine nach Anspruch 1 oder 2, **dadurch gekennzeichnet, dass** der Stator (2) aus Statorblechen (7) besteht, die in Axialrichtung gesehen aufeinander gestapelt sind, dass der Stator (2) auf seinem radial äußeren Umfang Vertiefungen (14) aufweist und dass die Federelemente (15) Bestandteile von an die Vertiefungen (14) in Axialrichtung angrenzenden Statorblechen (7) sind.

9. Elektrische Maschine nach Anspruch 8, **dadurch gekennzeichnet, dass** die Federelemente (15) als nach radial außen ragende Laschen (15) jeweils eines einzelnen der Statorbleche (7) ausgebildet sind und dass die Vertiefungen (14) als Ausnehmungen (14) jeweils mehrerer unmittelbar aufeinanderfolgender der Statorbleche (7) ausgebildet sind.

10. Elektrische Maschine nach Anspruch 9, **dadurch gekennzeichnet, dass** die Statorbleche (7) jeweils eine Anzahl an Laschen (15) und eine entsprechend größere Anzahl an Ausnehmungen (14) aufweisen und dass die Laschen (15) und die Ausnehmungen (14) tangential zur Rotationsachse (5) gesehen gleichmäßig verteilt angeordnet sind.

11. Elektrische Maschine nach einem der obigen Ansprüche, **dadurch gekennzeichnet, dass** die Federelemente (8,12,15) an ihren am Gehäuse (1) anliegenden Flächen aufgeraut sind.
